# EUROPÄISCHE PATENTSCHRIFT

(11) **EP 2 737 262 B1**
(45) Veröffentlichungstag und Bekanntmachung des Hinweises auf die Patenterteilung: **27.05.2015**
(21) Anmeldenummer: 12775603.9
(22) Anmeldetag: 26.07.2012
(51) Int. Cl.: F24J 2/10, F24J 2/16, F24J 2/52

(54) **VERFAHREN UND VORRICHTUNG ZUR HERSTELLUNG VON SPIEGEL - EINHEITEN FÜR HELIOSTATEN**
METHOD AND DEVICE FOR PRODUCING MIRROR UNITS FOR HELIOSTATS
PROCÉDÉ ET DISPOSITIF POUR PRODUIRE DES ENSEMBLES MIROIR CONÇUS POUR DES HÉLIOSTATS

(30) Priorität: 28.07.2011 DE 102011108715
(43) Veröffentlichungstag der Anmeldung: 04.06.2014
(73) Patentinhaber: Grenzebach Maschinenbau GmbH, 86663 Asbach-Baeumenheim (DE)
(72) Erfinder: HERRE, Erwin, 86675 Buchdorf (DE); VOGT, Bernd, 86 405 Meitingen (DE)
(74) Vertreter: Kindermann, Peter
(86) Internationale Anmeldenummer: PCT/DE2012/000760
(87) Internationale Veröffentlichungsnummer: WO 2013/013661

(56) Entgegenhaltungen:
- WO-A1-85/04132
- DE-A1- 3 134 690
- GB-A- 2 042 761
- GB-A- 2 097 328
- GB-A- 2 104 444
- US-A- 5 483 386

## Beschreibung

Die vorliegende Erfindung betrifft die Herstellung von Spiegel - Einheiten von Heliostaten.

Ein Heliostat ist eine mechanische Vorrichtung mit einer spiegelnden Fläche, die das Sonnenlicht unabhängig von der Änderung der Sonnenposition am Tageshimmel immer auf einen gleichen ortsfesten Punkt reflektiert.

Die vermutlich früheste Erwähnung des Heliostaten findet sich in einem Buch des niederländischen Physikers Willem J. Gravesande aus dem Jahre 1742.

Aus der DE 20 2007 008 593 U1 ist ein Heliostat für Solar - Turmkraftwerke mit einem Ständer und einer daran angeordneten Trägervorrichtung, die einen Reflektor aufnimmt, so dass der Reflektor um eine Drehachse und eine Schwenkachse in seiner Lage zum Sonnenstand veränderbar ist, bekannt.

Bei dieser Vorrichtung soll die Aufgabe gelöst werden, einen Heliostaten zu schaffen bei welchem die Herstellungskosten gering, die dauernden Betriebskosten niedrig und eine exakte Ansteuerung des Reflektors ermöglicht ist.

Gelöst wird diese Aufgabe nach den Merkmalen im Kennzeichen des Anspruchs 1 dadurch, dass die Einstellung der Lage des Reflektors mit einer hydraulischen Antriebseinheit vorgesehen ist, und dass die elektrische Antriebseinheit wenigstens einen hydraulischen Hubzylinder zur Einleitung einer Drehbewegung und wenigstens einen hydraulischen Hubzylinder zur Einleitung einer Schwenkbewegung umfasst. Weiterhin ist hierbei vorgesehen, dass die hydraulische Antriebseinheit ein Pumpenaggregat und zumindest einen hydraulischen Speicher zur Ansteuerung der daran angeschlossenen hydraulischen Hubzylinder aufweist, sowie, dass der hydraulische Speicher mit einem Überdruck beaufschlagt ist.

Als Vorteil wird bei dieser Lösung weiter angesehen, dass bei Stromausfall mittels des vorgespannten Hydrauliksystems die Reflektoren schnell aus dem Fokus bewegt werden können um eine Überhitzung, bzw. eine Zerstörung, des Absorbers zu vermeiden. Aufgrund der Vielzahl der am jeweiligen Reflektor aufgebrachten Flanschplatten und der damit verbundenen Befestigungspunkte am Tragrahmen ist jedoch eine exakte Einstellung der Reflektoren hinsichtlich der Wölbung in Richtung zum Absorber des Solar - Turmkraftwerks nicht möglich , da der zeitliche Aufwand hierfür immens wäre. Dadurch erfolgt eine Verminderung des Wirkungsgrades, der jedoch aufgrund des enormen zeitlichen Einstellaufwandes bislang in Kauf genommen wurde. An einigen Gruppen von Reflektoren in einem Feld von Heliostaten einer solchen Heliostatenanlage wird eine Verwölbung des Reflektors vorgenommen. Durch die feste Einspannung des Reflektors zum Tragrahmen und die erzeugte Spannung im Reflektor nach Einstellung der Wölbung kann es durch äußere Einflüsse, wie Steinschlag oder Sturmböen, zu einer Zerstörung des Reflektors kommen. Die unterschiedlichen Wärmeausdehnungen des Reflektorgehäuses und des Tragrahmens erhöhen dabei auch noch die Bruchgefahr.

Aus der DE 31 33 906 A1 ist eine Strahlungsreflektor - Stützkonstruktion und ein Verfahren zu ihrer Herstellung bekannt, das unter anderem auch für den Einsatz bei Solarkollektoren gedacht ist. Sonnen - bzw. Solarkollektoren der hierbei betroffenen Art können in Form von Rotationsparaboloiden, die häufig als Flachschalen bezeichnet werden, ausgebildet sein, die reflektiertes Sonnenlicht auf einen einzigen Brennpunkt fokussieren, der sich mit der Flachschale bewegt. Weiter wird hier davon gesprochen, dass Zweiachsen - Heliostate reflektiertes Sonnenlicht auf einen Festbrennpunkt an der Spitze eines Turms fokussieren und alternativ solche Reflexionsflächen wannenförmig mit Parabolquerschnitt sein können, wobei Sonnenlicht auf einen Linearbrennpunkt fokussiert wird.

In der DE 31 33 906 A1 ist die Schaffung einer verbesserten rückseitigen Stützkonstruktion für Reflexionsflächen von, u.a. Sonnenreflektoren, beabsichtigt, wobei die Stützkonstruktion aus kostengünstigen Baustoffen herstellbar sein sollen, die doch ihren Zweck in ausreichendem Maß erfüllen.

Zur Lösung dieser Aufgabe wird gemäß dem Patentanspruch 14 ein wannenförmiger Sonnenreflektor mit einem Reflektor in Form einer parabolischen Wanne mit einer Längssymmetrieachse zur Reflexion von Sonnenlicht und zur Fokussierung des reflektierten Sonnenlichts auf einen Linear - Brennpunkt mit einer rückwärtigen Stützkonstruktion vorgeschlagen, wobei diese Stützkonstruktion die folgenden Merkmale aufweist.
1) eine auf die Rückfläche des Reflektors haftend aufgebrachte dünne Schicht aus glasfaserverstärktem Beton,
2) einen auf diese Schicht monolithisch gegossenen Drehmomentträger, der parallel zur Längsachse des Reflektors verläuft und in einer den Reflektor halbierenden Ebene liegt, und
3) eine Mehrzahl Querrippen, die von dem Drehmomentträger nach außen zu beiden Rändern des Reflektors verlaufen,
wobei der Drehmomentträger und die Querrippen rohrförmig sind und jeweils eine mit einer dünnen Schicht aus glasfaserverstärktem Beton beschichtete Form aufweisen.

In der DE-A-3134690 ist ferner eine Solarenergiereflektorplatte und ein Verfahren zu ihrer Herstellung beschrieben.

Es ist die Aufgabe der vorliegenden Erfindung, eine Vorrichtung und ein Verfahren zur Herstellung von Spiegel - Einheiten für Heliostaten zu schaffen, die eine präzise und spannungsfreie Fertigung gewährleisten.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 8 gelöst.

In den Unteransprüchen sind weitere vorteilhafte Ausgestaltungen der Erfindung gekennzeichnet.

Im Wesentlichen besteht diese Lösung darin, dass mittels konstruktiver Maßnahmen die spannungsfreie Lagerung und Platzierung der verwendeten Spiegel auf dem Grundkörper bei einer hohen Taktrate der Fertigung von Spiegel - Einheiten erreicht wird.

Die erfindungsgemäße Vorrichtung wird im Folgenden näher beschrieben.

Es zeigen im Einzelnen:
Figur 1: eine Draufsicht auf die Fertigungsanlage
Figur 2: einen Querschnitt des Grundkörpers der Spiegel - Einheit Figur 3: eine Draufsicht auf eine Spiegel - Einheit
Figur 4: eine Schräg - Ansicht auf den Aufnahmebereich einer Fixier - Lafette
Figur 5:einen Schnitt A- A aus dem Fixier und Drehbereich
Figur 6: eine Schräg - Ansicht auf den Fixierbereich einer Fixier - Lafette
Figur 7: einen Querschnitt aus dem Andruckbereich der Spiegel - Einheit

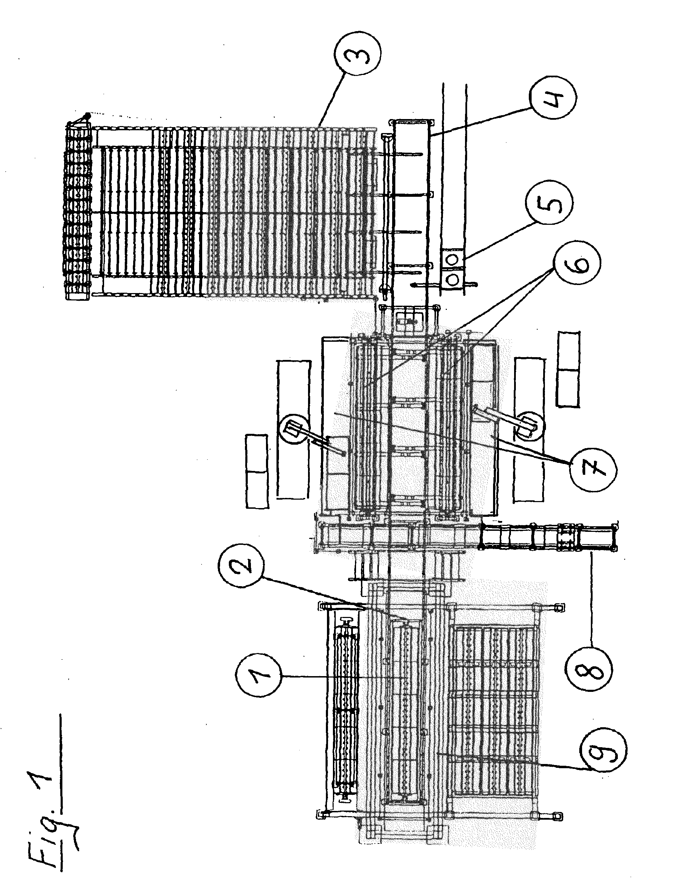

Die Fig.1 zeigt eine Draufsicht auf die erfindungsgemäße Fertigungsanlage von Heliostaten - Spiegeleinheiten 1, bestehend aus fünf nebeneinander liegenden Spiegeln 11, die hier jedoch der Übersicht wegen nicht bezeichnet sind. Diese Heliostaten - Spiegel - Einheit 1 ist in einer Fixier - Lafette 2 gelagert.

Im linken Bereich der Fig.1 ist hier eine Messvorrichtung 9 dargestellt, in der die Qualitätsprüfung der, von der Fertigungslinie gelieferten, Heliostaten - Spiegeleinheiten 1 erfolgt. Ihre Funktion wird später erläutert. Es werden hier sämtliche Toleranzfelder der relevanten Fertigungsmasse überwacht und, wenn notwendig, fehlerhafte Exemplare aussortiert.

Die hier gezeigte Heliostaten - Spiegeleinheit 1 kennzeichnet mit ihrer Lage die zentrale Fertigungslinie in deren Bereich von beiden Seiten die benötigten Werkstücke zugeliefert werden und Zugriffe auf die im Fertigungsprozess stehenden Werkstücke erfolgen.

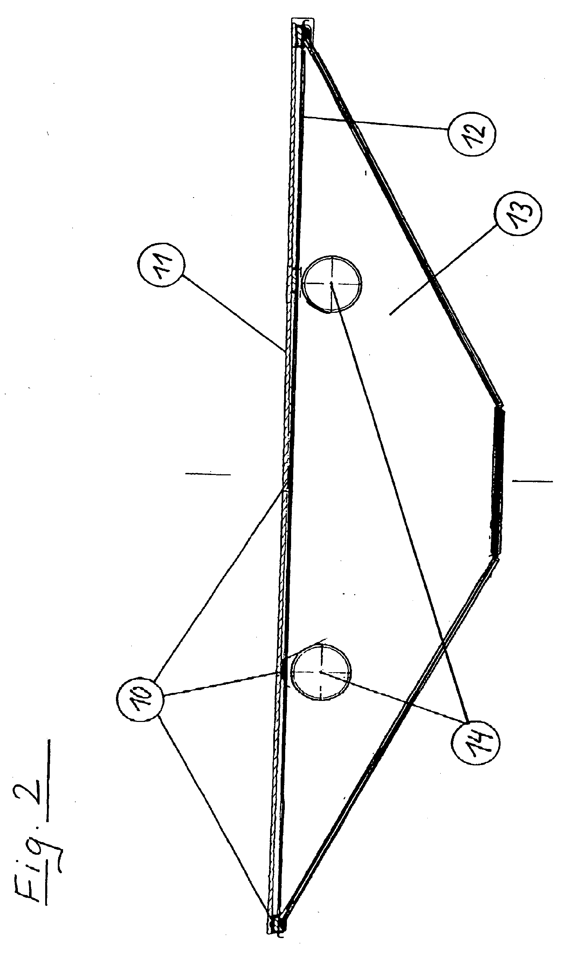

Im rechten Bereich der in der Fig.1 gezeigten Anlage ist eine, auf die zentrale Fertigungslinie zuführende, Spiegelträger -Lieferungszuführung 3 gezeigt. Ein Spiegelträger besteht aus einem, an den beiden Längsseiten spitz zulaufenden, länglichen Formkörper dessen Länge in etwa der Länge von fünf aneinander gelegten Spiegeln 11 entspricht. Sein Querschnitt ist in der Fig.2 mit der Bezeichnung Grundkörper 13 bezeichnet. Er wird dort näher beschrieben.

Ein Spiegelträger wird jeweils in eine Fixierlafette 2 gesetzt und dort auf erfindungsgemäße Weise spannungsfrei fixiert, wie später beschrieben wird. Die benötigten Fixierlafetten 2 werden auf den Laufschienen 4 zugeführt. Entsprechende Vorrichtungen sind dem Fachmann geläufig.

Auf der anderen, der Spiegelträger - Lieferungszuführung 3 gegenüberliegenden, Seite der Fertigungslinie ist eine Klebe - Vorrichtung 5 dargestellt. Diese Vorrichtung 5 beliefert die Oberfläche der jeweiligen Spiegelträger, die Spiegelträger - Fläche 12, in Längsrichtung mit Kleberaupen 10, wie später in der Fig.2 besser zu zeigen ist. In der skizzenartigen Darstellung der Fig.1 ist lediglich eine rohrähnliche Zufuhrstelle für Klebstoff gezeigt. Es versteht sich, dass zum schnelleren Auftrag von Klebstoff jeweils jede Kleberaupe eine solche Zufuhrstelle zugeteilt bekommt.

Im mittleren Bereich der in der Fig. 1 gezeigten Anlage sind zu beiden Seiten dieser Fertigungslinie Einrichtungen 7 zum Spiegel - Auflegen dargestellt. Diese Einrichtungen 7 bestehen hier beispielhaft aus Greifrobotern die die benötigten Spiegel jeweils einem skizzenartig dargestellten Vorrätslager entnehmen, wobei die generelle Zufuhr an Spiegeln 11 mittels der Spiegel - Zuführung 8 erfolgt. Das Fixieren und Andrücken der Spiegel auf die mit Kleberaupen 10 versehene Spiegelträger - Fläche 12 erfolgt mittels einer Einrichtung 6.

Die Fig.2 zeigt einen Querschnitt des Grundkörpers der Spiegel - Einheit.

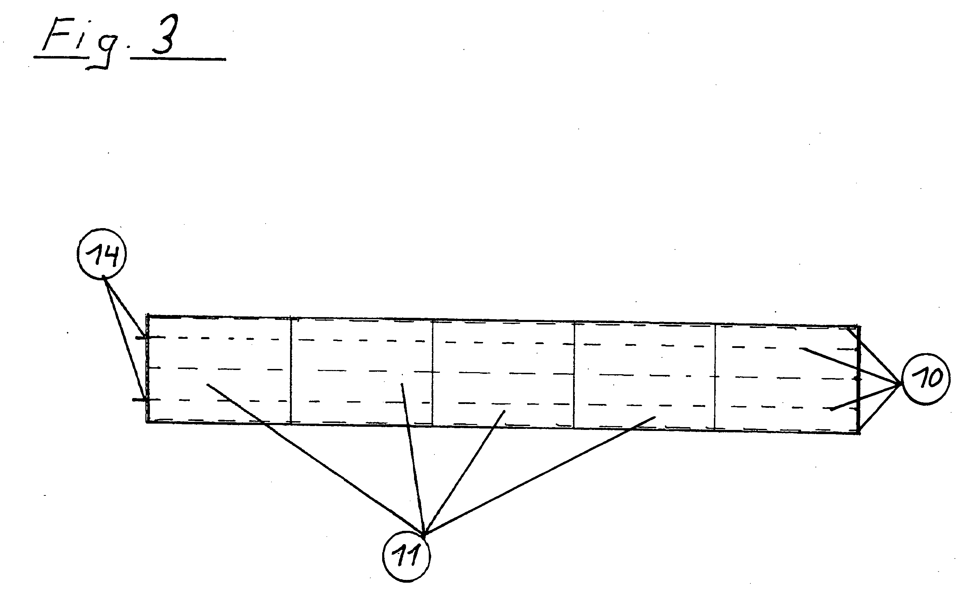

Der Grundkörper 13 einer Heliostaten - Spiegeleinheit besteht aus zwei, in der Fig.2 im Querschnitt gezeigten, Endplatten , in der Form eines an den beiden Längsseiten spitz zulaufenden Formkörpers . Die Spiegelträger- Fläche 12 ist mit Kleberaupen 10 beaufschlagt. In der Fig.2 sind lediglich auf der linken Seite vom linken Rand bis zur Mitte beispielhaft drei Kleberaupen 10 bezeichnet. Die rechte Seite ist entsprechend mit weiteren Kleberaupen beaufschlagt. Die Funktion der mit 14 bezeichneten Befestigungspunkte wird bei der Beschreibung der Figuren 3,4 und 5 erläutert werden.

Fig.3 zeigt eine Draufsicht auf eine Spiegel - Einheit. Hier sind die eine Heliostaten - Spiegeleinheit repräsentierenden beispielhaft fünf nebeneinander liegenden Spiegel 11 gezeigt, die von mehreren Kleberaupen 10 beaufschlagt sind. Auf der linken Seite sind die Befestigungspunkte 14 markiert, die sich auch auf der rechten Seite an der entsprechenden Stelle befinden.

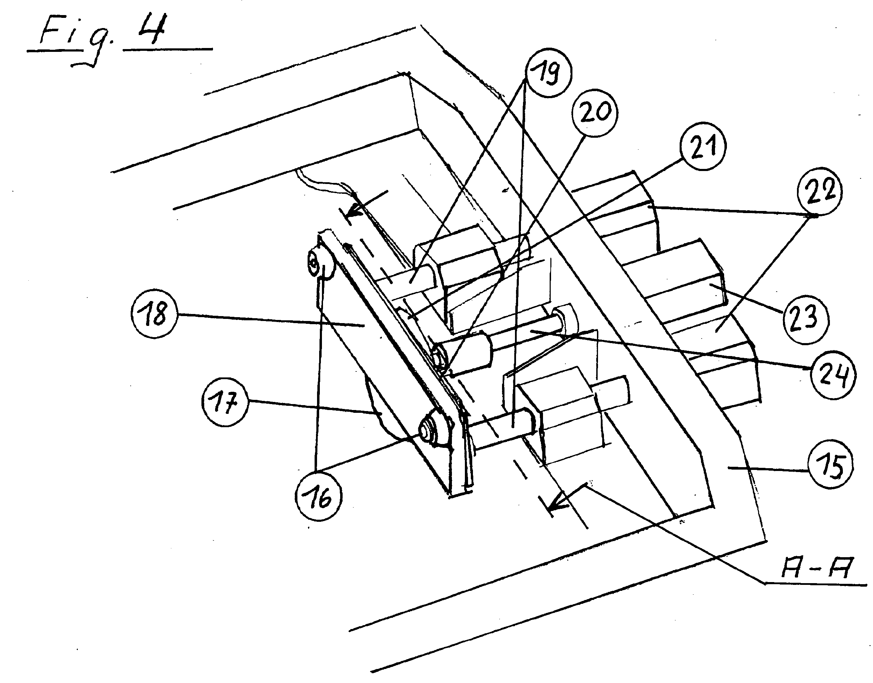

In der Fig.4 ist eine Schräg - Ansicht auf den Aufnahmebereich einer Fixier - Lafette dargestellt. Hierbei sind in dem Rahmen 15 einer Fixier - Lafette zwei Laufbuchsen 22 zur Horizontalführung 19 einer Aufnahme und Fixier - Einrichtung eingelassen, wobei ein Druckzylinder 23 mit einer Kolbenstange 24 in der Mitte der beiden Laufbuchsen 22 zur Horizontalbewegung der Aufnahme- und Fixiereinrichtung vorgesehen ist. Die Dreheinrichtung zur spannungsfreien Aufnahme des Grundkörpers 13 besteht aus einer vorderen Drehscheibe 17 die verbunden ist mit einer Aufnahmeplatte 18, die wiederum zwei Zentrierkegel 16 trägt und einer hinteren Drehscheibenaufnahme mit Feststellbremse 21, die verbunden ist mit einer Verbindungsplatte 20.

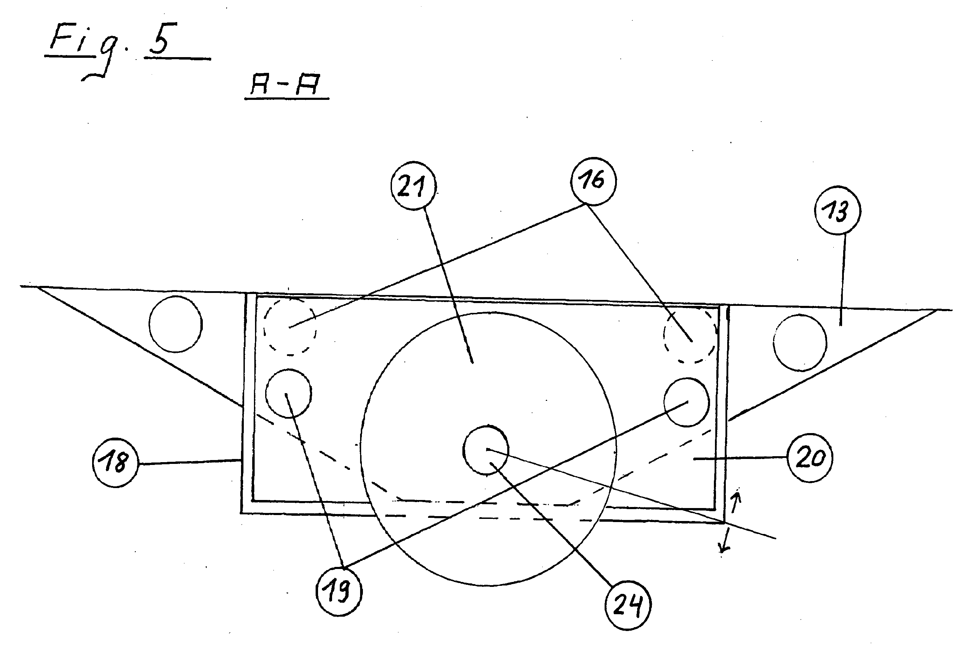

Die Fig.5 zeigt einen Schnitt A - A aus dem Fixier und Aufnahmebereich der in der Fig.4 dargestellten Anordnung von hinten aus der Richtung der Kolbenstange 24. Die Verbindungsplatte 20 ist hierbei kleiner ausgeführt als die Aufnahmeplatte 18 der vorderen Drehscheibe. Die Bezeichnungen entsprechen den in der Fig. 4 beschriebenen. Die in der rechten Ecke der Fig.5 gezeigten Pfeile sollen auf eine eventuelle zulässige Verdrehung des Grundkörpers ( 13 ) hinweisen. Die Verdrehung wird mittels Drehscheibenaufnahme und Feststellbremse 21 fixiert. Eine solche Verdrehung wird mittels eines, nicht dargestellten, Drehwinkel - Sensors erfasst.

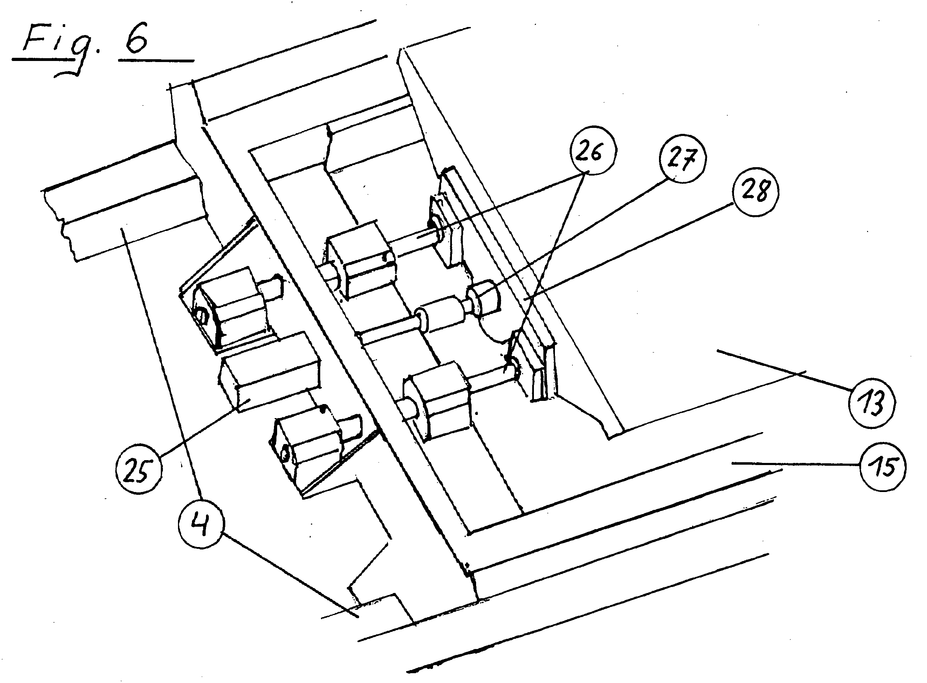

Die Fig.6 zeigt eine Schräg - Ansicht auf den Fixierbereich einer Fixier - Lafette 2 auf den beiden Laufschienen 4, wie sie in der Fig. 1 dargestellt sind.

Der hier dargestellte Bereich der Fixier - Lafette entspricht dem anderen Ende des in der Fig.4 gezeigten Rahmens 15, wobei der Grundkörper 13 zwischen den beiden gezeigten Endbereichen des Rahmens 15 eingespannt wird. Auch auf dieser Seite sind zwei Horizontalführungen 26, entsprechend den Horizontalführungen 19 der Fig. 4, eine Aufnahmeplatte 28, entsprechend der Aufnahmeplatte 18 in der Fig.4, und eine Kolbenstange 27, entsprechend der Kolbenstange 24 in der Fig.4, vorgesehen. Dem Druckzylinder 23 in der Fig.4 entspricht hier der Druckzylinder 25. Die den Zentrierkegeln 16 entsprechenden Zentrierkegel auf der Aufnahmeplatte 28 sind hier nicht zu erkennen.

Die Funktionsweise der erfindungsgemäßen Fixierung des Spiegelträgers, bzw. eines Grundkörpers 13 besteht darin, dass der Spiegelträger absolut spannungsfrei fixiert wird. Eine eventuell vorhandene leichte Verspannung des Grundkörpers 13 wird mittels einer Verdrehung der vorderen Drehscheibe17 in Relation zu der Stellung der hinteren Drehscheibenaufnahme21 ausgeglichen und mittels Feststellbremse fixiert. Hierbei wird zweckmäßig zuerst der Grundkörper 13 in der in der Fig.6 gezeigten Aufnahmeeinrichtung eingesetzt und dann mittels der Aufnahme und Dreheinrichtung , wie sie in der Fig.4 gezeigt ist eingespannt und ohne Torsionskräfte zu der Längsachse des Grundkörpers 13 spannungsfrei durch die Feststellbremse21 Fixiert.

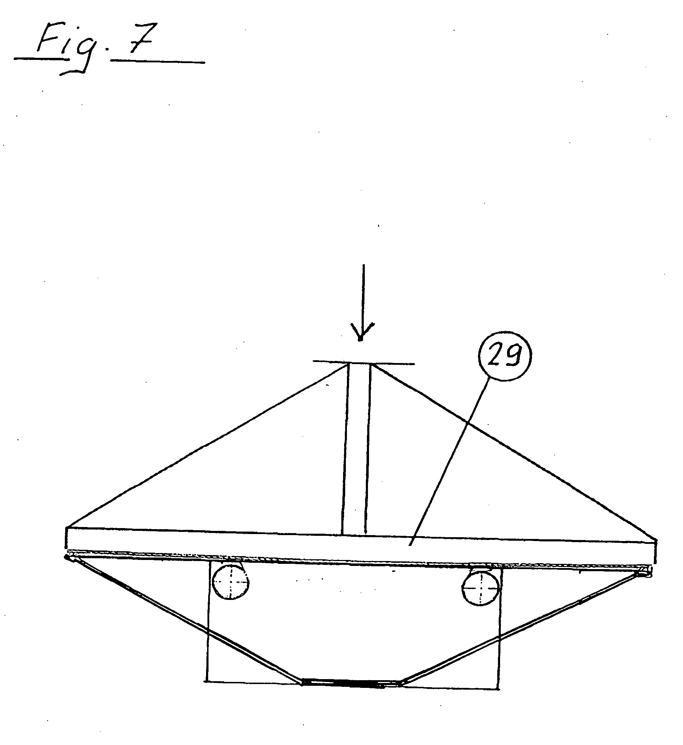

Die Fig.7 zeigt einen Querschnitt aus dem Andruckbereich der Spiegel - Einheit mittels einer Vorrichtung zur Verpressung der Spiegel ( 11 ). Hier ist im Querschnitt zu erkennen wie mittels einer Druckplatte ( 29 ) zur Spiegelfixierung der Spiegel 11 solange auf die Spiegelträger- Fläche 12 gedrückt wird, bis die Kleberaupen 10 ausgehärtet sind. Diese den Anpressdruck realisierende Vorrichtung erhält für ihre Steuerung ein Signal von einem Drehwinkel - Sensor der im Bereich der beiden Aufnahmeplatten 18,20 installiert ist und der eine relative Verdrehung dieser beiden Aufnahmeplatten 18,20, und damit des Grundkörpers 13 , registriert. Mittels der eingestellten Wölbung der absolut biegesteifen Druckplatte 29 und in der Dicke unterschiedlich verteilten, Kleberaupen 10 wird somit die gewünschte Wölbung der jeweiligen Spiegel 11 dauerhaft erhalten. Weitere mittels der Dreh und Fixiereinrichtung ausgeglichene Verspannungen werden über eine entsprechende Verteilung der Klebemasse ausgeglichen. Da die Stellung einer Fixier - Lafette und der Druckplatte 29 zueinander fest eingestellt sind, ist die Stellung der Spiegel 11 entsprechend den gewünschten Vorgaben exakt mittels des Klebstoffes dauerhaft fixiert auch wenn ein Grundkörper 13 leicht verzogen ist. Auf diese Weise ist gewährleistet, dass jeder Grundkörper spannungsfrei mit den entsprechenden Spiegeln verbunden ist.

Die abschließende Qualitätsprüfung der Spiegeleinheit findet ebenfalls spannungsfrei um Messfehler zu vermeiden mit der Fixier-Lafette in der Messvorrichtung 9 statt. Es werden mittels weiterer Sensoren nicht nur die Abmessungen und die Belastbarkeit der hergestellten Spiegeleinheit sondern auch die relevanten Parameter der Spiegel 11 registriert und es wird für jede Spiegeleinheit ein Messprotokoll erstellt.

Die Steuerung der komplexen Bewegungsvorgänge und die Signalverarbeitung der verwendeten Sensoren erfordern ein spezielles Steuerungsprogramm der Anlage.

### Bezuaszeichenliste

- 1: Heliostaten - Spiegeleinheit
- 2: Fixier - Lafette
- 3: Spiegelträger - Lieferungszuführung
- 4: Laufschienen für die Fixier - Lafetten
- 5: Klebe - Vorrichtung
- 6: Einrichtung zum Fixieren und Andrücken der Spiegel
- 7: Einrichtung zum Spiegel - Auflegen
- 8: Spiegel - Zuführung
- 9: Messvorrichtung
- 10: Kleberaupen
- 11: Spiegel
- 12: Spiegelträger - Fläche
- 13: Grundkörper einer Heliostaten - Spiegeleinheit
- 14: Befestigungspunkte einer Heliostaten - Spiegeleinheit
- 15: Rahmen einer Fixier - Lafette
- 16: Zentrierkegel ( Befestigungs - Verankerung )
- 17: vordere Fixier - Drehscheibe
- 18: Aufnahmeplatte der vorderen Fixier - Drehscheibe
- 19: Horizontalführung der Aufnahme und Fixier - Einrichtung
- 20: Verbindungsplatte ( für Horizontalführung und hintere Drehscheibenaufnahme )
- 21: hintere Drehscheibenaufnahme mit Feststellbremse
- 22: Laufbuchsen der Horizontalführung
- 23: Druckzylinder der Dreh und Fixier-Einrichtung
- 24: Kolbenstange
- 25: Druckzylinder der Fixierungsseite
- 26: Horizontalführung der Fixierungsseite
- 27: Kolbenstange der Fixierungsseite
- 28: Verbindungs - und Aufnahmeplatte der Fixierungsseite
- 29: Druckplatte der Spiegelfixierung

## Patentansprüche

1. Vorrichtung zur Herstellung von Spiegel-Einheiten für Heliostaten mit einem Grundkörper als Träger einer spiegelnden Oberfläche, mit einer Fixier-Lafette als Garant für eine spannungsfreie Lagerung des Grundkörpers bei der Herstellung, und mit den folgenden Merkmalen:
a) einer Zuführung von Grundkörpern (13) mittels einer Spiegelträger-Lieferungszuführung (3),
b) einer Zuführung von Fixier-Lafetten (2) mittels Laufschienen (4), wobei die Fixier-Lafetten (2) auf jeder Querseite Mittel für eine Zweipunktlagerung eines Grundkörpers (13) aufweisen und somit eine spannungsfreie Lagerung gewährleistet ist,
c) einer Vorrichtung zur Umsetzung eines Grundkörpers (13) in eine Fixier-Lafette,
d) einer Spiegel-Zuführung (8),
e) einer Klebe-Vorrichtung (5),
f) einer Vorrichtung zur Verpressung eines Grundkörpers (13) mit einer Mehrzahl von Spiegeln (11), und
g) einer Messvorrichtung (9) zur Überprüfung relevanter Toleranzen des Herstellungsprozesses.

2. Vorrichtung nach Anspruch 1, **dadurch gekennzeichnet, dass** jede Fixier-Lafette (2) an ihren beiden gegenüberliegenden Querseiten Aufnahmeplatte (18, 28) aufweist die jeweils mittels einer Zweipunkt-Lagerung die Halterung eines Grundkörpers (13) gewährleistet, wobei beide Aufnahmeplatten (18, 28) pneumatisch betätigt werden können und zusätzlich auf der einnen Seite eine Aufnahmeplatte (18) über eine Dreh- und Fixiervorrichtung (17, 21) eine leichte Verdrehung des Grundkörpers (13) zulässt, und wobei mittels einer Feststellbremse spannungsfrei fixiert wird.

3. Vorrichtung nach Anspruch 1 oder 2, **dadurch gekennzeichnet, dass** das Ausgangssignal des Drehwinkel-Sensors zur Qualitätskontrolle verwendet wird.

4. Vorrichtung nach einem der vorhergehenden Ansprüche, **dadurch gekennzeichnet, dass** der Grundkörper (13) mit seitlichen Befestigungspunkten (14) versehen ist.

5. Vorrichtung nach einem der vorhergehenden Ansprüchen, **dadurch gekennzeichnet, dass** mittels der Klebe-Vorrichtung (5) mehrere parallele Kleberaupen (10) in unterschiedlicher Dicke gleichzeitig aufgetragen werden.

6. Vorrichtung nach einem der vorhergehenden Ansprüche, **dadurch gekennzeichnet, dass** die Vorrichtung zur Verpressung eines Grundkörpers (13) mit einer Mehrzahl von Spiegeln (11) eine Druckplatte (29) aufweist, die in allen Richtungen biegesteif ist und auf ihrer Wirkfläche eine einstellbare Wölbung aufweist, die der gewünschten Wölbung der Spiegelfläche entspricht.

7. Vorrichtung nach einem der vorhergehenden Ansprüche, **dadurch gekennzeichnet, dass** die Messvorrichtung (9) Mittel zur Überprüfung sämtlicher relevanter Parameter aufweist, die Fertigungstoleranzen aufweisen können.

8. Verfahren zur Herstellung von Spiegel-Einheiten für Heliostaten mit einer Vorrichtung gemäß Anspruch 1, mit den folgenden Merkmalen:
a) einer Fertigungslinie werden mittels einer Spiegelträger-Lieferungszuführung (3) Grundkörper (13) zugeführt, wobei diese entweder vor Ort aus Blechen mittels Verbindungsmitteln verfertigt werden, oder in fertiger Form angeliefert werden,
b) der Fertigungslinie werden mittels Laufschienen (4) Fixier-Lafetten (2) zugeführt, wobei diese auf jeder Querseite Mittel für eine Zweipunktlagerung eines Grundkörpers (13) aufweisen und durch eine spielfreie Lagerung des Grundkörpers (13) auf einer der beiden Seiten mittels einer Dreh- und Fixiereinrichtung (17, 21) eine spannungsfreie Halterung gewährleistet ist, wobei mittels eines Sensors eine eventuelle hieraus resultierende Verdrehung des Grundkörpers (13) erfasst wird,
c) jeweils ein Grundkörper (13) wird mittels einer Greifeinrichtung in eine Fixier-Lafette (2) versetzt und mittels pneumatischer Mittel spannungsfrei fixiert,
d) mittels einer Klebe-Vorrichtung (5) werden mehrere parallele Kleberaupen (10) in unterschiedlicher Dicke gleichzeitig aufgetragen,
e) über eine Spiegel-Zuführung (8) wird mittels einer Greifeinrichtung einem Depot jeweils ein Spiegel (10) entnommen und auf die mit Klebemittel versehene Fläche des Grundkörpers (13) gesetzt, wobei dieser Vorgang beendet wird, wenn die gesamte vorgesehene Fläche mit Spiegeln (10) bedeckt ist,
f) der so mit Spiegeln (10) bedeckte Grundkörper (13) wird einer Vorrichtung zur Verpressung der Spiegel (10) mit dem Grundkörper (13) mittels einer Druckplatte (29) zugeführt, und
g) nach der Beendigung des Klebevorgangs wird die Fixier-Lafette (2) einer Messvorrichtung (9) zugeführt, in der alle relevanten Parameter des Herstellungsprozesses auf unzulässige Toleranzen überprüft werden.

9. Computerprogramm mit einem Programmcode zur Durchführung der Verfahrensschritte nach Anspruch 8, wenn das Programm in einem Computer ausgeführt wird.

10. Maschinenlesbarer Träger mit dem Programmcode eines Computerprogramms zur Durchführung des Verfahrens nach Anspruch 8, wenn das Programm in einem Computer ausgeführt wird.

## Claims

1. Device for producing mirror units for heliostats comprising a main body as carrier of a reflective surface, comprising a fixing carriage to ensure stress-free mounting of the main body during production, and comprising the following features:
a) a feed for main bodies (13) by means of a mirror carrier delivery feed (3),
b) a feed for fixing carriages (2) by means of running rails (4), wherein the fixing carriages (2) have, on each transverse side, means for a two-point mounting of a main body (13) and thus ensure stress-free mounting,
c) a device for transferring a main body (13) into a fixing carriage,
d) a mirror feed (8),
e) an adhesive bonding device (5),
f) a device for pressing on a main body (13) with a plurality of mirrors (11), and
g) a measuring device (9) for checking relevant tolerances of the production process.

2. Device according to Claim 1,
**characterized in that**
each fixing carriage (2) has, on its two opposite transverse sides, holding plates (18, 28) which each ensure the mounting of a main body (13) by means of a two-point mounting, wherein both holding plates (18, 28) can be actuated pneumatically and, in addition, on one side, a holding plate (18) permits slight rotation of the main body (13) via a rotating and fixing device (17, 21), and wherein stress-free fixing is carried out by means of a locking brake.

3. Device according to Claim 1 or 2,
**characterized in that**
the output signal from the rotational angle sensor is used for quality control.

4. Device according to one of the preceding claims,
**characterized in that**
the main body (13) is provided with lateral fixing points (14).

5. Device according to one of the preceding claims,
**characterized in that**
by means of the adhesive bonding device (5), a plurality of parallel beads of adhesive (10) of different thickness are applied simultaneously.

6. Device according to one of the preceding claims,
**characterized in that**
the device for pressing on a main body (13) with a plurality of mirrors (11) has a pressure plate (29) which is flexurally rigid in all directions and, on its active surface, has an adjustable curvature which corresponds to the desired curvature of the mirror surfaces.

7. Device according to one of the preceding claims,
**characterized in that**
the measuring device (9) has means for checking all the relevant parameters which can have fabrication tolerances.

8. Method for producing mirror units for heliostats having a device according to Claim 1, comprising the following features:
a) main bodies (13) are fed to a production line by means of a mirror carrier delivery feed (3), wherein said main bodies are either fabricated on site from metal sheets by means of connecting means or are supplied in fabricated form,
b) fixing carriages (2) are fed to the production line by means of running rails (4), wherein said fixing carriages have, on each transverse side, means for a two-point mounting of a main body (13) and, by means of play-free mounting of the main body (13) on one of the two sides by means of a rotating and fixing apparatus (17, 21), stress-free mounting is ensured, wherein any possible rotation of the main body (13) resulting therefrom is registered by means of a sensor,
c) in each case a main body (13) is transferred into a fixing carriage (2) by means of a gripping apparatus and fixed without stress by pneumatic means,
d) by means of an adhesive bonding device (5), a plurality of parallel beads of adhesive (10) of different thickness are applied simultaneously,
e) via a mirror feed (8), by means of a gripping apparatus, in each case a mirror (10) is removed from a store and is placed on the surface of the main body (13) provided with adhesive, wherein this operation is completed when the entire envisaged surface is covered with mirrors (10),
f) the main body (13) covered with mirrors (10) in this way is fed to a device for pressing on the mirrors (10) with the main body (13) by means of a pressure plate (29), and
g) following the completion of the adhesive bonding operation, the fixing carriage (2) is fed to a measuring device (9), in which all the relevant parameters of the production process are checked for impermissible tolerances.

9. Computer program comprising a program code for carrying out the method steps according to Claim 8 when the program is executed in a computer.

10. Machine-readable carrier comprising the program code of a computer program for carrying out the method according to Claim 8 when the program is executed in a computer.

## Revendications

1. Ensemble de fabrication d'unités de miroir pour héliostats, présentant un corps de base servant de support à une surface réfléchissante et un affût de fixation qui garantit un montage sans contrainte du corps de base lors de la fabrication, l'ensemble présentant les caractéristiques suivantes :
a) une amenée de corps de base (13) au moyen d'une amenée (3) de livraison de supports de miroir,
b) une amenée d'affûts de fixation (2) au moyen de rails de déplacement (4), les affûts de fixation (2) présentant sur chaque côté transversal des moyens de montage en deux points d'un corps de base (13) et garantissant ainsi un montage sans contraintes,
c) un ensemble de transformation d'un corps de base (13) dans un affût de fixation,
d) une amenée (8) de miroirs,
e) un ensemble de collage (5),
f) un ensemble de compression d'un corps de base (13) doté de plusieurs miroirs (11) et
g) un dispositif de mesure (9) qui vérifie les tolérances pertinentes de l'opération de fabrication.

2. Ensemble selon la revendication 1, **caractérisé en ce que** chaque affût de fixation (2) présente sur ses deux côtés transversaux opposés des plaques de réception (18, 28) qui assurent chacune au moyen d'un montage en deux points le maintien d'un corps de base (13), les deux plaques de réception (18, 28) pouvant être actionnées pneumatiquement et une plaque de réception (18) permettant de plus sur un côté une légère rotation du corps de base (13) par l'intermédiaire d'un ensemble de rotation et de fixation (17, 21) et étant immobilisée sans contrainte au moyen d'un frein d'immobilisation.

3. Ensemble selon les revendications 1 ou 2, **caractérisé en ce que** le signal de sortie du capteur d'angle de rotation est utilisé pour le contrôle de qualité.

4. Ensemble selon l'une des revendications précédentes, **caractérisé en ce que** le corps de base (13) est doté de points latéraux de fixation (14).

5. Ensemble selon l'une des revendications précédentes, en ce que plusieurs cordons parallèles d'adhésif (10) sont appliqués simultanément à des épaisseurs différentes au moyen de l'ensemble de collage (5).

6. Ensemble selon l'une des revendications précédentes, en ce que l'ensemble de compression d'un corps de base (13) portant plusieurs miroirs (11) présente une plaque de poussée (29) rigide en flexion dans toutes les directions et présentant sur sa surface d'action un bombage ajustable qui correspond au bombage souhaité des surfaces réfléchissantes.

7. Ensemble selon l'une des revendications précédentes, en ce que le dispositif de mesure (9) présente des moyens de vérification de tous les paramètres pertinents qui peuvent présenter des tolérances de fixation.

8. Procédé de fabrication d'unités de miroir pour héliostats à l'aide d'un ensemble selon la revendication 1, le procédé présentant les caractéristiques suivantes :
a) des corps de base (13) sont amenés au moyen d'une amenée (3) de fourniture de supports de miroir à une ligne de fabrication, ces corps de base étant fabriqués sur place à partir de tôles au moyen de moyens de liaison ou étant fournis sous forme prête à l'emploi,
b) des affûts de fixation (2) sont amenés à la ligne de fabrication au moyen de rails de déplacement (4), ces affûts de fixation présentant sur chaque côté transversal des moyens de montage en deux points d'un corps de base (13) et un maintien sans contrainte étant garanti par un montage sans jeu du corps de base (13) sur l'un des deux côtés au moyen d'un dispositif de rotation et de fixation (17, 21), la rotation qui pourrait éventuellement en résulter du corps de base (13) étant saisie au moyen d'un capteur,
c) chaque corps de base (13) est placé dans un affût de fixation (2) au moyen d'un dispositif de saisie et fixé sans contrainte à l'aide de moyens pneumatiques,
d) plusieurs cordons parallèles d'adhésif (10) d'épaisseurs différentes sont appliqués simultanément au moyen d'un ensemble de collage (5),
e) par une amenée (8) de miroirs, un miroir (10) est prélevé au moyen d'un dispositif de saisie dans une réserve et est placé sur la surface du corps de base (13) dotée d'agent adhésif, cette opération étant terminée lorsque la totalité de la surface prévue a été recouverte de miroirs (10),
f) le corps de base (13) ainsi recouvert de miroirs (10) est amené à un dispositif de compression des miroirs (10) sur le corps de base (13) au moyen d'une plaque de poussée (29) et
g) lorsque l'opération de collage est terminée, l'affût de fixation (2) est amené à un ensemble de mesure (9) qui vérifie si les tolérances de tous les paramètres pertinents du processus de fabrication sont admissibles.

9. Programme informatique doté d'un code de programme permettant de mettre en oeuvre les étapes du procédé selon la revendication 8 lorsque le programme est exécuté sur un ordinateur.

10. Support lisible par machine et présentant le code de programme d'un programme informatique permettant de mettre en oeuvre le procédé selon la revendication 8 lorsque le programme est exécuté sur un ordinateur.
